(19) Europäisches Patentamt
European Patent Office
Office européen des brevets

(11) **EP 2 744 031 A1**

(12) **EUROPEAN PATENT APPLICATION**
published in accordance with Art. 153(4) EPC


(43) Date of publication:
**18.06.2014 Bulletin 2014/25**

(21) Application number: **12824377.1**

(22) Date of filing: **03.08.2012**

(51) Int Cl.:
***H01M 10/0567** (2010.01)* ***H01G 11/54** (2013.01)*
***H01M 4/485** (2010.01)* ***H01M 4/58** (2010.01)*
***H01M 10/052** (2010.01)* ***H01M 10/0568** (2010.01)*
***H01M 10/0569** (2010.01)*

(86) International application number:
**PCT/JP2012/069818**

(87) International publication number:
**WO 2013/024717 (21.02.2013 Gazette 2013/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.08.2011 JP 2011176594**



(71) Applicant: **UBE Industries, Ltd.**
**Yamaguchi 755-8633 (JP)**

(72) Inventors:
- **ABE, Koji**
  **Yamaguchi 755-8633 (JP)**
- **SHIMAMOTO, Kei**
  **Yamaguchi 755-8633 (JP)**

(74) Representative: **ABG Patentes, S.L.**
**Avenida de Burgos, 16D**
**Edificio Euromor**
**28036 Madrid (ES)**


(54) **NONAQUEOUS ELECTROLYTE SOLUTION AND ELECTROCHEMICAL ELEMENT USING SAME**


(57) Disclosed are a non-aqueous electrolytic solution that exhibits excellent electrochemical characteristics over a wide temperature range, and an electrochemical device using the non-aqueous electrolytic solution. The non-aqueous electrolytic solution includes a non-aqueous solvent and an electrolyte salt dissolved in the non-aqueous solvent, wherein the non-aqueous electrolytic solution further comprises one compound represented by general formula (I):

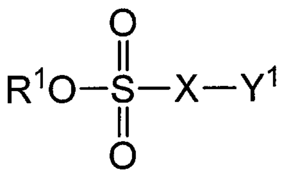

( I )

wherein $R^1$ represents alkyl having 1 to 6 carbon atoms, cycloalkyl having 3 to 6 carbon atoms, alkenyl having 2 to 6 carbon atoms, alkynyl having 3 to 6 carbon atoms, or aryl having 6 to 12 carbon atoms; X represents a divalent linking group that has 1 to 6 carbon atoms and is optionally substituted by a halogen atom; and $Y^1$ represents a specific substituent, for example, alkylcarbonyl.


EP 2 744 031 A1

## Description

TECHNICAL FIELD

The present invention relates to a non-aqueous electrolytic solution having excellent electrochemical characteristics over a wide range of temperature, and an electrochemical device using the same.

BACKGROUND ART

Electrochemical devices, in particular lithium ion rechargeable batteries, have recently become used extensively in small electronic equipments such as portable phones and notebook computers, electric automobiles, and electric power storage applications. These electronic equipments and automobiles are possibly used over a wide range of temperature, for example, from high temperatures in midsummer to low temperatures under severe cold environments, and, thus, the electronic equipments used under these environments need to have well-balanced electrochemical characteristics over a wide range of temperature.

In particular, there is a pressing need to reduce a $CO_2$ emission for global warming prevention purposes. Early popularization is required of hybrid electric vehicles (HEVs), plug-in-hybrid electric vehicles (PHEVs), and battery-type electric vehicles (BEVs) among environment-responsive vehicles loaded with electric storage devices including electrochemical devices such as lithium ion rechargeable batteries and capacitors. The moving distance of automobiles is so long that there is a possibility that the automobiles are used over a wide range of temperature in areas from very hot areas in the tropical zone to severe cold areas. Accordingly, particularly these on-vehicle electrochemical devices are required to have excellent electrochemical characteristics over a wide range of temperature from high temperatures to low temperatures without undergoing a deterioration with the elapse of time.

The term "lithium ion rechargeable battery" as used herein is used as a concept embracing the so-called lithium ion rechargeable battery.

The lithium ion rechargeable battery is composed mainly of a positive electrode and a negative electrode containing a material that can occlude and release lithium, and a non-aqueous electrolytic solution composed of a lithium salt and a non-aqueous solvent, the non-aqueous solvent being a carbonate such as ethylene carbonate (EC) or propylene carbonate (PC). Metal lithium, metal compounds that can occlude and release lithium (for example, simple substances and oxides of metals and alloys with lithium), and carbon materials are known as the negative electrode. In particular, lithium ion rechargeable batteries using carbon materials such as coke, artificial graphite, and natural graphite that can occlude and release lithium have extensively been put into practical use.

In lithium ion rechargeable batteries that has, as the material for the negative electrode, highly crystallized carbon materials such as natural graphite and artificial graphite, it is known that decomposition products or gases produced as a result of reductive decomposition of a solvent in the non-aqueous electrolytic solution on the surface of the negative electrode during charging inhibit a desirable electrochemical reaction of batteries and are causative of a lowering in cycle characteristics. Further, the accumulation of the decomposition product of the non-aqueous solvent makes it impossible to smoothly occlude lithium in the negative electrode and to release the occluded lithium from the negative electrode, and, as a result, good electrochemical characteristics over a wide range of temperature cannot be obtained.

Lithium ion rechargeable batteries that has, as the material for the negative electrode, lithium metal, alloys of lithium metals, simple substances of tin, silicon and the like, and oxides of the simple substances can provide a high initial capacitance, but on the other hand, sometimes causes the progress of particle size reduction during cycling. For this reason, it is known that, as compared with the use of carbon materials as the negative electrode, a reductive decomposition of the non-aqueous solvent occurs at an accelerated rate, resulting in a significant lowering in battery properties such as battery capacitance and cycle characteristics. The occurrence of particle size reduction of the material for the negative electrode and the accumulation of the decomposition product of the non-aqueous solvent make it impossible to smoothly occlude lithium in the negative electrode and to release the occluded lithium from the negative electrode, and, consequently, good electrochemical characteristics over a wide range of temperature cannot be obtained.

On the other hand, in lithium ion rechargeable batteries that use, for example, $LiCoO_2$, $LiMn_2O_4$, $LiNiO_2$, and $LiFePO_4$, as the positive electrode, in some cases, the non-aqueous solvent is locally and partially oxidatively decomposed at an interface between the material for the positive electrode and the non-aqueous electrolytic solution in a charged state in the non-aqueous electrolytic solution. It is known that decomposition products and gases produced by the decomposition inhibit a desirable electrochemical reaction of batteries, making it impossible to realize good electrochemical characteristics over a wide range of temperature.

As described above, decomposition products and gases produced as a result of decomposition of the non-aqueous electrolytic solution on the positive electrode and on the negative electrode inhibit the migration of lithium ions and cause swelling of the battery, leading to lowered battery performance. On the other hand, there is an increasing

tendency towards advanced multifunctionalization of electronic equipment loaded with a lithium ion rechargeable battery and increased power consumption. This has led to an ever-increasing tendency towards an increase in capacitance of lithium ion rechargeable batteries, and, for example, an enhancement in density of the electrode or a reduction in a wasteful space volume within the battery is carried out. As a result, the volume occupied by the non-aqueous electrolytic solution within the battery is reduced. Accordingly, disadvantageously, the decomposition of the non-aqueous electrolytic solution, even when decomposed in a small amount, leads to a lowering in electrochemical characteristics.

JP 2007-95380 A (PTL 1) discloses a non-aqueous electrolytic solution with methyl methanesulfonate added thereto and describes that the non-aqueous electrolytic solution has excellent cycle characteristics. As a result of studies conducted by the present inventors, it has been found that, in the non-aqueous electrolytic solution disclosed in the prior art, there is still a room for an improvement in electrochemical characteristics, particularly in low-temperature discharge characteristics after high-temperature continuous charge.

[Citation List]

[Patent Literature]

[PTL 1] JP 2007-95380A

SUMMARY OF THE INVENTION

Accordingly, an object of the present invention is to provide a non-aqueous electrolytic solution having excellent electrochemical characteristics over a wide range of temperature and an electrochemical device using the non-aqueous electrolytic solution.

The present inventors have now found that the addition of an ester compound having a structure including a sulfonyl group bonded to a specific substituent through a carbon atom to a non-aqueous electrolytic solution can realize a non-aqueous electrolytic solution having excellent electrochemical characteristics over a wide range of temperature and, in particular, the use of the non-aqueous electrolytic solution can improve electrochemical characteristics of the lithium battery. The present invention has been made based on such findings.

Thus, according to the present invention, there is provided a non-aqueous electrolytic solution comprising a non-aqueous solvent and an electrolyte salt dissolved in the non-aqueous solvent, wherein the non-aqueous electrolytic solution further comprises one compound represented by general formula (I):

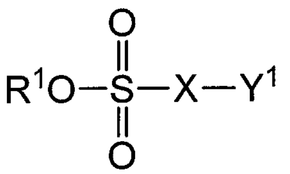

( I )

wherein

$R^1$ represents
a straight or branched alkyl group having 1 to 6 carbon atoms and being optionally substituted by a halogen atom,
a cycloalkyl group having 3 to 7 carbon atoms and being optionally substituted by a halogen atom,
a straight or branched alkenyl group having 2 to 6 carbon atoms and being optionally substituted by a halogen atom,
a straight or branched alkynyl group having 2 to 6 carbon atoms and being optionally substituted by a halogen atom, or
an aryl group having 6 to 12 carbon atoms and being optionally substituted by a halogen atom;
X represents a divalent linking group which has 1 to 6 carbon atoms and is optionally substituted by a halogen atom; and
$Y^1$ represents any of groups represented by general formulae (II) to (VI):

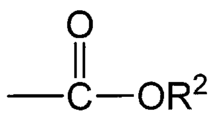

( II )

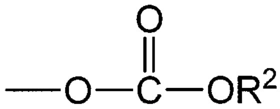

(III)

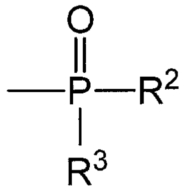

(IV)

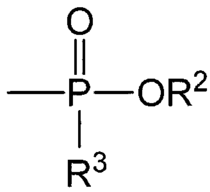

(V)

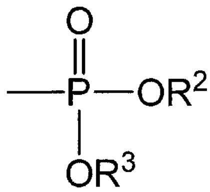

(VI)

wherein $R^2$ and $R^3$ each independently represents

a straight or branched alkyl group which has 1 to 6 carbon atoms and is optionally substituted by a halogen atom,
a cycloalkyl group which has 3 to 7 carbon atoms and is optionally substituted by a halogen atom,
a straight or branched alkenyl group which has 2 to 6 carbon atoms and is optionally substituted by a halogen atom,
a straight or branched alkynyl group which has 2 to 6 carbon atoms and is optionally substituted by a halogen atom, or
an aryl group which has 6 to 12 carbon atoms and is optionally substituted by a halogen atom.

According to another aspect of the present invention, there is provided an electrochemical device comprising: a positive electrode; a negative electrode; and a non-aqueous electrolytic solution containing an electrolyte salt dissolved in a non-aqueous solvent, wherein the non-aqueous electrolytic solution is the non-aqueous electrolytic solution according to the present invention.

The present invention can provide a non-aqueous electrolytic solution that has excellent electrochemical characteristics over a wide range of temperature, particularly a non-aqueous electrolytic solution that has improved low-temperature discharge characteristics after high-temperature continuous charge, and an electrochemical device such as lithium batteries using the non-aqueous electrolytic solution.

DESCRIPTION OF THE INVENITON

[Non-aqueous electrolytic solution]

The non-aqueous electrolytic solution according to the present invention is a non-aqueous electrolytic solution comprising an electrolyte salt dissolved in a non-aqueous solvent, wherein the non-aqueous electrolytic solution further comprises one ester compound represented by general formula (I).

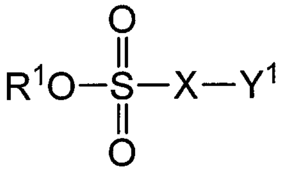

(I)

wherein

$R^1$ represents
a straight or branched alkyl group which has 1 to 6 carbon atoms and is optionally substituted by a halogen atom,
a cycloalkyl group which has 3 to 7 carbon atoms and is optionally substituted by a halogen atom,
a straight or branched alkenyl group which has 2 to 6 carbon atoms and is optionally substituted by a halogen atom,
a straight or branched alkynyl group which has 2 to 6 carbon atoms and is optionally substituted by a halogen atom, or
an aryl group which has 6 to 12 carbon atoms and is optionally substituted by a halogen atom;
X represents a divalent linking group which has 1 to 6 carbon atoms and is optionally substituted by a halogen atom; and
$Y^1$ represents any of groups represented by general formulae (II) to (VI):

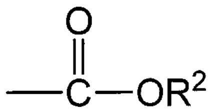

(II)

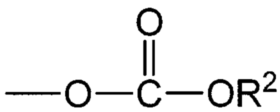

(III)

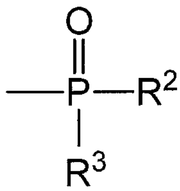

(IV)

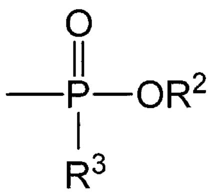

(V)

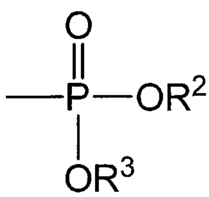

(VI)

wherein $R^2$ and $R^3$ each independently represent

a straight or branched alkyl group which has 1 to 6 carbon atoms and is optionally substituted by a halogen atom,
a cycloalkyl group which has 3 to 7 carbon atoms and is optionally substituted by a halogen atom,
a straight or branched alkenyl group which has 2 to 6 carbon atoms and is optionally substituted by a halogen

atom, a straight or branched alkynyl group which has 2 to 6 carbon atoms and is optionally substituted by a halogen atom, or
an aryl group which has 6 to 12 carbon atoms and is optionally substituted by a halogen atom.

The reason why the non-aqueous electrolytic solution according to the preset invention has excellent electrochemical characteristics over a wide range of temperature has not been elucidated yet, but is believed to be as follows. The ester compound represented by general formula (I) has two substituents through a divalent linking group X, that is, has a sulfonic ester group and a substituent that is less susceptible to a reductive decomposition than the sulfonic ester group. Accordingly, it is considered that the decomposition mildly proceeds on the negative electrode during initial charge and, as a result, the film on the negative electrode is not excessively densified and, at the same time, is highly heat-resistant and strong. When decomposition products of both the sulfonic ester group and the substituent $Y^1$ are present through a substituent X in the film at given intervals, as compared with compounds having only the sulfonic ester such as methyl methanesulfonate described in PTL 1, a unique effect of improving electrochemical characteristics over a wide range of temperature from low temperatures to high temperatures can be attained.

<u>Ester compounds represented by general formula (I)</u>

In general formulae (I) to (VI), $R^1$ to $R^3$ each independently represents straight or branched alkyl that has 1 to 6 carbon atoms, preferably 1 to 4 carbon atoms and is optionally substituted by a halogen atom; cycloalkyl that has 3 to 6 carbon atoms, preferably 5 or 6 carbon atoms, and is optionally substituted by a halogen atom; straight or branched alkenyl that has 2 to 6 carbon atoms, preferably 2 to 4 carbon atoms and is optionally substituted by a halogen atom; straight or branched alkynyl that has 2 to 6 carbon atoms, preferably 3 or 4 carbon atoms and is optionally substituted by a halogen atom; or aryl that has 6 to 12 carbon atoms, preferably 6 to 10 carbon atoms and is optionally substituted by a halogen atom. In a preferred embodiment of the present invention, $R^1$ to $R^3$ each represent more preferably straight or branched alkenyl that has 3 or 4 carbon atoms and is optionally substituted by a halogen atom; straight or branched alkynyl that has 3 or 4 carbon atoms and is optionally substituted by a halogen atom; or aryl that has 6 to 8 carbon atoms and is optionally substituted by a halogen atom; further more preferably straight or branched alkynyl that has 3 or 4 carbon atoms and is optionally substituted by a halogen atom. The halogen atom preferably refers to a fluorine, chlorine, bromine, or iodine atom, more preferably a fluorine atom.

In compounds represented by general formulae (I) to (VI), specific examples of suitable $R^1$ to $R^3$ include straight chain alkyl such as methyl, ethyl, n-propyl, n-butyl, n-pentyl, and n-hexyl, branched chain alkyl such as iso-propyl, sec-butyl, tert-butyl, and tert-amyl, alkyl in which a part of hydrogen atoms has been substituted by a fluorine atom, such as fluoromethyl, trifluoromethyl, and 2,2,2-trifluoroethyl, straight chain alkenyl such as vinyl, 2-propen-1-yl, 2-buten-1-yl, 3-buten-1-yl, 4-penten-1-yl, and 5-hexen-1-yl, branched chain alkenyl such as 3-buten-2-yl, 2-methyl-1-propen-1-yl, 2-methyl-2-propen-1-yl, 3-penten-2-yl, 2-methyl-3-buten-2-yl, and 3-methyl-2-buten-1-yl, straight chain alkynyl such as 2-propyn-1-yl, 2-butyn-1-yl, 3-butyn-1-yl, 4-pentyn-1-yl, and 5-hexyn-1-yl, branched chain alkynyl such as 3-butyn-2-yl, 3-pentyn-2-yl, and 2-methyl-3-butyn-2-yl, cycloalkyl such as cyclopropyl, cyclobutyl, cyclopentyl, and cyclohexyl, and aryl such as phenyl, 2-methylphenyl, 3-methylphenyl, 4-methylphenyl, 4-tert-butylphenyl, 2,4,6-trimethylphenyl, 2-fluorophenyl, 3-fluorophenyl, 4-fluorophenyl, 2,4-difluorophenyl, 2,6-difluorophenyl, 3,4-difluorophenyl, 2,4,6-trifluorophenyl, pentafluorophenyl, 2-trifluoromethyl, and 4-trifluoromethylphenyl. Among them, methyl, ethyl, n-propyl, iso-propyl, cyclopentyl, cyclohexyl, 2,2,2-trifluoroethyl, 2-propen-1-yl, 2-propyn-1-yl, 2-butyn-1-yl, 2-fluorophenyl, 3-fluorophenyl, 4-fluorophenyl, 2,4-difluorophenyl, 2,6-difluorophenyl, pentafluorophenyl, and 2-trifluoromethylphenyl are preferred, and 2-propen-1-yl, 2-propyn-1-yl, and 2-butyn-1-yl are more preferred.

In general formula (I), the divalent linking group that is represented by X, has 1 to 6 carbon atoms, and is optionally substituted by a halogen atom is preferably straight or branched alkylene that has 1 to 6 carbon atoms and is optionally substituted by a halogen atom, more preferably straight or branched alkylene that has 1 to 4 carbon atoms and is optionally substituted by a halogen atom. Specific examples thereof include alkylene such as methylene, ethan-1,2-diyl, ethan-1,1-diyl, propan-1,3-diyl, propan-1,2-diyl, propan-1,1-diyl, butan-1,4-diyl, butan-1,3-diyl, 2-methylpropan-1,2-diyl, butan-1,1-diyl, pentan-1,5-diyl, and hexan-1,6-diyl, and alkylene halides such as monofluoromethylene, difluoromethylene, and 2-trifluoromethylene. Preferred are alkylenes such as methylene, ethan-1,2-diyl, ethan-1,1-diyl, propan-1,3-diyl, propan-1,2-diyl, propan-1,1-diyl, butan-1,4-diyl, butan-1,3-diyl, 2-methylpropan-1,2-diyl, and butan-1,1-diyl, monofluoromethylene, difluoromethylene, and 2-trifluoromethylene. Methylene and ethan-1,2-diyl are more preferred.

In one embodiment of the present invention, a group of preferred compounds of general formula (I) is compounds in which
$R^1$ represents a straight or branched alkyl group having 1 to 6 carbon atoms, preferably 1 to 4 carbon atoms,
a cycloalkyl group having 3 to 7 carbon atoms, preferably 5 or 6 carbon atoms,
a straight or branched alkynyl group having 2 to 6 carbon atoms, preferably 3 or 4 carbon atoms, or
an aryl group, preferably phenyl group which has 6 to 12 carbon atoms and is optionally substituted by a halogen atom,

preferably a halogen atom selected from fluorine, chlorine, bromine, and iodine atoms,
X represents a straight or branched alkylene group having 1 to 6 carbon atoms, preferably 1 to 4 carbon atoms,
$Y^1$ represents formula (II) or (III)
wherein $R^2$ represents
a straight or branched alkyl group having 1 to 6 carbon atoms, preferably 1 to 4 carbon atoms,
a cycloalkyl group having 3 to 7 carbon atoms, preferably 5 or 6 carbon atoms,
a straight or branched alkynyl group having 2 to 6 carbon atoms, preferably 3 or 4 carbon atoms, or
an aryl group, preferably phenyl group that has 6 to 12 carbon atoms and is optionally substituted by a halogen atom, preferably a halogen atom selected from fluorine, chlorine, bromine, and iodine atoms. In this group of compounds, a group of compounds in which $Y^1$ represents formula (II) is more preferred. Compounds in which $Y^1$ represents formula (III) wherein $R^2$ represents straight chain or branched chain alkyl having 1 to 6 carbon atoms (preferably 1 to 4 carbon atoms) are another group of preferred compounds.

In another preferred embodiment of the present invention, a group of preferred compounds of general formula (I) is compounds in which
$R^1$ represents
a straight or branched alkyl group having 1 to 6 carbon atoms, preferably 1 to 4 carbon atoms or
a straight or branched alkynyl group having 2 to 6 carbon atoms, preferably 3 or 4 carbon atoms)
X represents a straight or branched alkylene group having 1 to 6 carbon atoms, preferably 1 to 4 carbon atoms,
$Y^1$ represents formula (IV), (V), or (VI)
wherein $R^3$ represents a straight or branched alkyl group having 1 to 6 carbon atoms, preferably 1 to 4 carbon atoms. In this group of compounds, compounds in which $Y^1$ represents formula (VI) are further preferred.

The following compounds may be mentioned as specific examples of compounds represented by general formula (II). Specific examples of compounds represented by general formula (I) in which $Y^1$ represents general formula (II) are as follows.

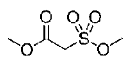
A1

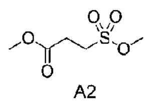
A2

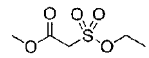
A3

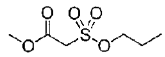
A4

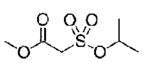
A5

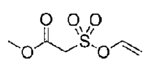
A6

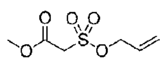
A7

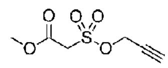
A8

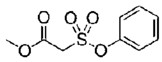
A9

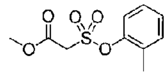
A10

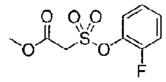
A11

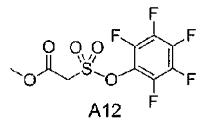
A12

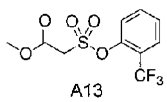
A13

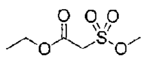
A14

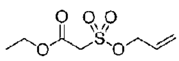
A15

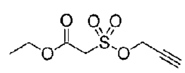
A16

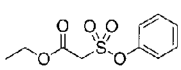
A17

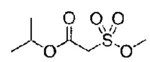
A18

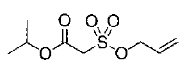
A19

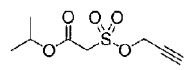
A20

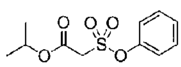
A21

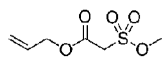
A22

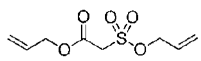
A23

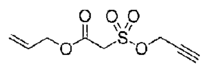
A24

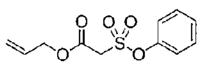
A25

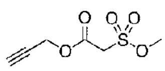
A26

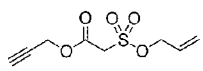
A27

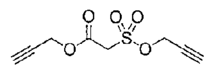
A28

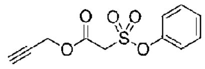
A29

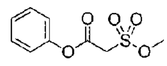
A30

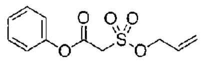
A31

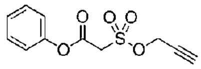
A32

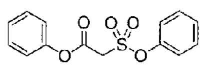
A33

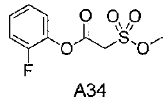
A34

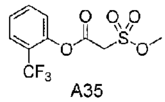
A35

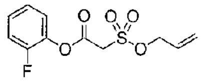
A36

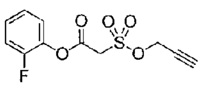
A37

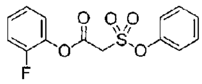
A38

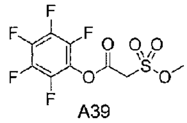
A39

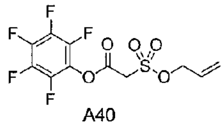
A40

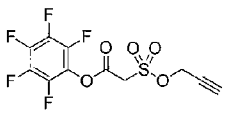
A41

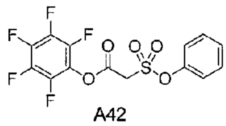
A42

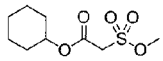
A43

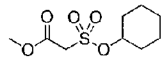
A44

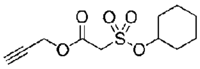
A45

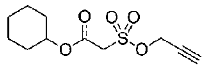
A46

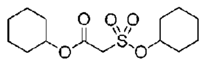
A47

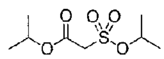
A48

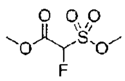
A49

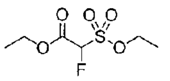
A50

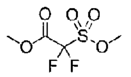
A51

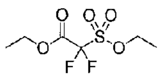
A52

Specific examples of compounds represented by general formula (I) in which $Y^1$ represents general formula (III) are as follows.

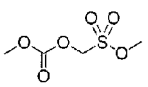
B1

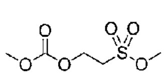
B2

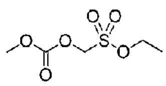
B3

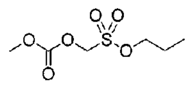
B4

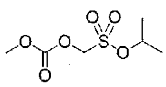
B5

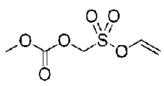
B6

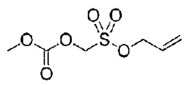
B7

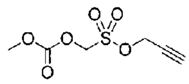
B8

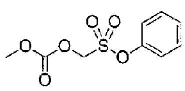
B9

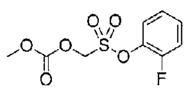
B10

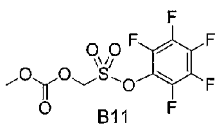
B11

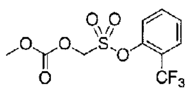
B12

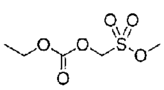
B13

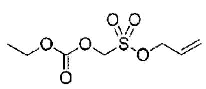
B14

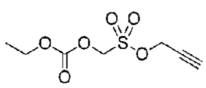
B15

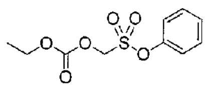
B16

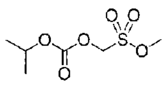
B17
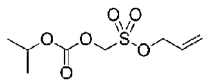
B18
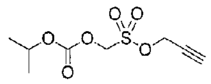
B19
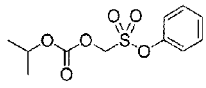
B20

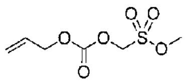
B21
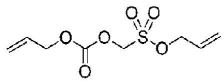
B22
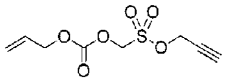
B23
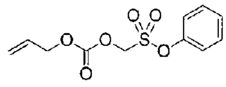
B24

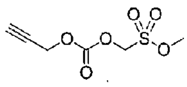
B25
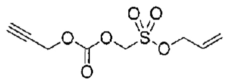
B26
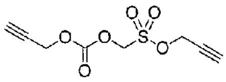
B27
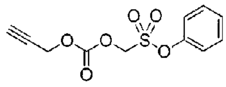
B28

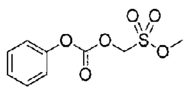
B29
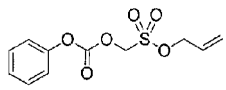
B30
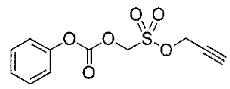
B31
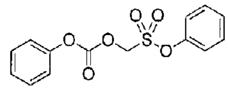
B32

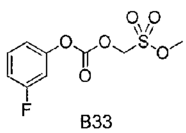
B33
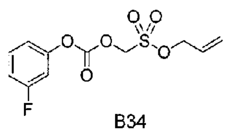
B34
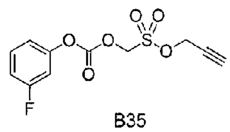
B35
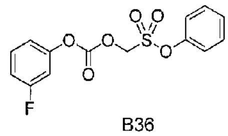
B36

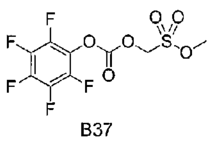
B37
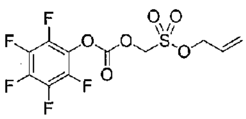
B38
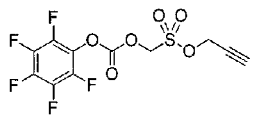
B39
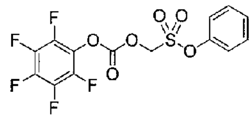
B40

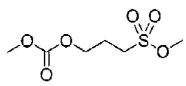
B41
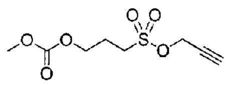
B42
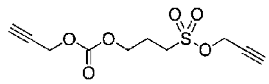
B43

Specific examples of compounds represented by general formula (I) in which $Y^1$ represents general formula (IV) are as follows.

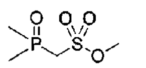
C1
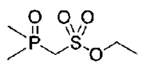
C2
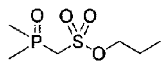
C3
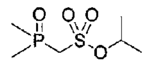
C4

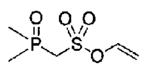
C5
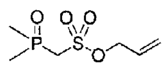
C6
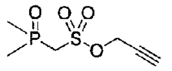
C7
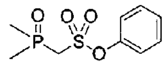
C8

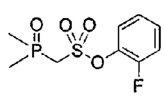
C9
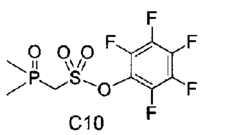
C10
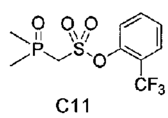
C11
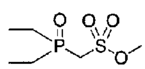
C12

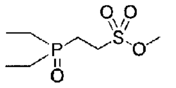
C13

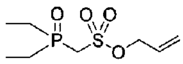
C14

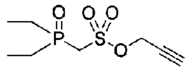
C15

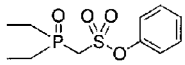
C16

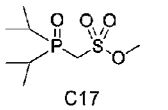
C17

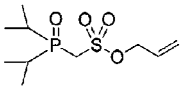
C18

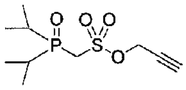
C19

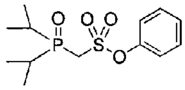
C20

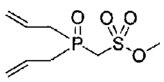
C21

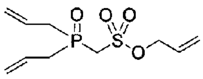
C22

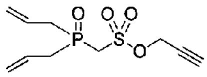
C23

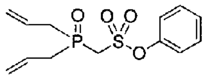
C24

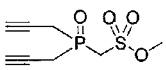
C25

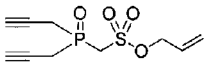
C26

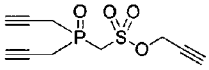
C27

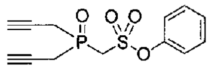
C28

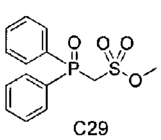
C29

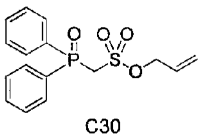
C30

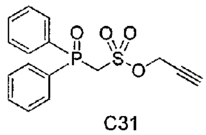
C31

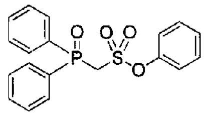
C32

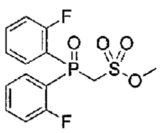
C33

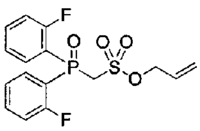
C34

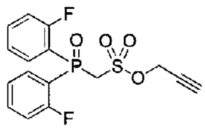
C35

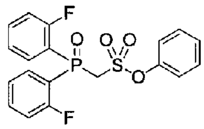
C36

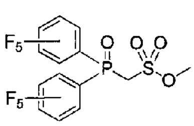
C37

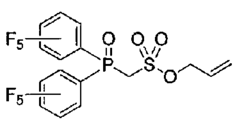
C38

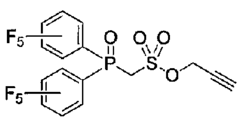
C39

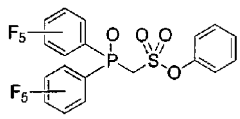
C40

Specific examples of compounds represented by general formula (I) in which $Y^1$ represents general formula (V) are as follows.

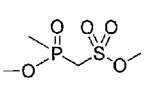
D1

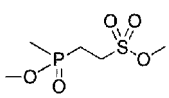
D2

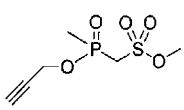
D3

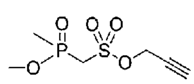
D4

Specific examples of compounds represented by general formula (I) in which $Y^1$ represents general formula (VI) are as follows.

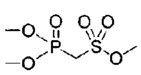
E1

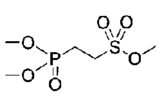
E2

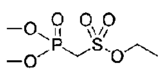
E3

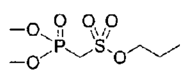
E4

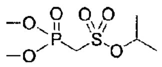
E5

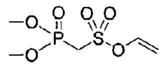
E6

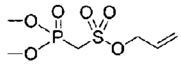
E7

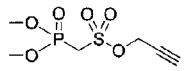
E8

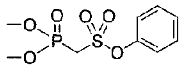
E9

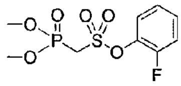
E10

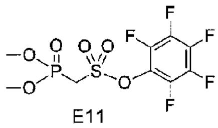
E11

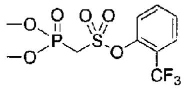
E12

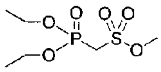
E13

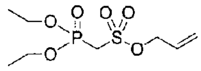
E14

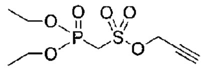
E15

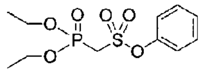
E16

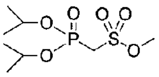
E17

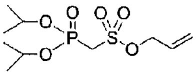
E18

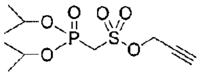
E19

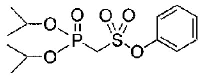
E20

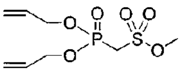
E21

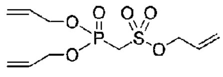
E22

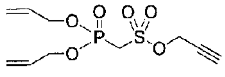
E23

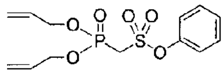
E24

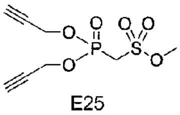
E25

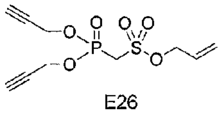
E26

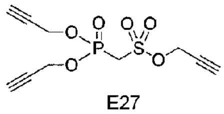
E27

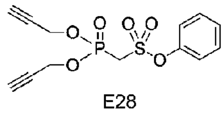
E28

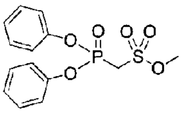
E29

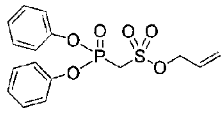
E30

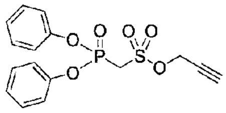
E31

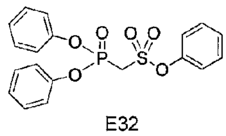
E32

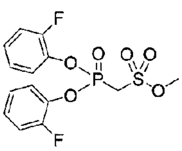
E33

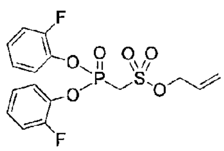
E34

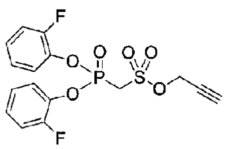
E35

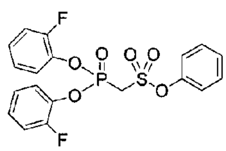
E36

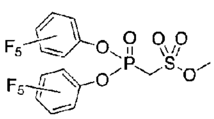
E37

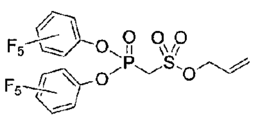
E38

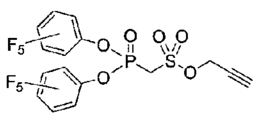
E39

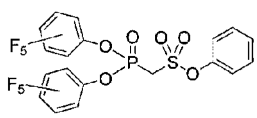
E40

Among the ester compounds represented by general formula (I), compounds represented by any one of general formula (II), (IV), (V), and (VI) are preferred, compounds represented by general formula (II) or (VI) are more preferred, and compounds represented by general formula (II) are particularly preferred. Among them, compounds having structures A1, A7, A8, A11 to A13, A22, A26, A28, A34, A35, A39, A47, A48, A49, and A51 are preferred. Methyl ((2-propen-1-yloxy)carbonyl)methanesulfonate (structural formula A22), methyl ((2-propyn-1-yloxy)carbonyl)methanesulfonate (structural formula A26), 2-propyn-1-yl ((2-propyn-1-yloxy)carbonyl)methanesulfonate (structural formula A28), 2-propen-1-yl (methoxycarbonyl)methanesulfonate (structural formula A7), 2-propyn-1-yl (methoxycarbonyl)methanesulfonate (structural formula A8), and 2-fluorophenyl (methoxycarbonyl)methanesulfonate (structural formula A11) are more preferred, and methyl ((2-propen-1-yloxy)carbonyl)methanesulfonate and methyl ((2-propyn-1-yloxy)carbonyl)methanesulfonate are particularly preferred.

In the non-aqueous electrolytic solution of the present invention, the content of the compound represented by general formula (I) contained in the non-aqueous electrolytic solution may be properly determined by taking into consideration, for example, the realization of good electrochemical characteristics and properties required of the electrochemical device. For example, the content of the compound in the non-aqueous electrolytic solution is preferably 0.001 to 10% by mass. When the content is not more than 10% by mass, there is no significant possibility that the film is excessively formed on the electrode and a lowering in low-temperature characteristics is lowered.. When the content is not less than 0.001 % by mass, satisfactory film formation can be realized and the effect of improving high-temperature continuous charge characteristics is enhanced. In a more preferred embodiment of the present invention, the content of the compound in the non-aqueous electrolytic solution is preferably not less than 0.05% by mass, more preferably not less than 0.1% by mass, still more preferably not less than 0.3% by mass. The upper limit of the content is preferably 7% by mass, more preferably 5% by mass, still more preferably 3% by mass.

The non-aqueous electrolytic solution of the present invention contains, in addition of the compound represented by general formula (I), at least a non-aqueous solvent and lithium-containing electrolyte salt. The combined use of other additives is also possible.

[Non-aqueous solvent]

Cyclic carbonates, chain esters, lactones, ethers, and amides may be mentioned as the non-aqueous solvent used in the non-aqueous electrolytic solution of the present invention, and cyclic carbonates or combinations of cyclic carbonates with chain esters are preferred. The term "chain ester" as used herein is used as a concept including chain carbonates and chain carbonic esters.

Chain carbonate

Cyclic carbonates usable in the present invention include ethylene carbonate (EC), propylene carbonate (PC), 1,2-butylene carbonate, 2,3-butylene carbonate, 4-fluoro-1,3-dioxolan-2-one (FEC), trans- or cis-4,5-difluoro-1,3-dioxolan-2-one (both the forms being collectively referred to as "DFEC"), vinylene carbonate (VC), and vinylethylene carbonate (VEC). Among them, cyclic carbonates having a carbon-carbon double bond or a fluorine atom are preferred because low-temperature discharge characteristics after high-temperature continuous charge can be significantly improved. A combination of a cyclic carbonate having a carbon-carbon double bond with a cyclic carbonate having a fluorine atom is more preferred. VC and VEC are more preferred as the cyclic carbonate having a carbon-carbon double bond, and FEC and DFEC are still more preferred as the cyclic carbonate having a a fluorine atom.

The content of the cyclic carbonate having a carbon-carbon double bond may be properly determined by taking into consideration, for example, the realization of good electrochemical characteristics and performance required of the electrochemical device. For example, the content of the cyclic carbonate having a carbon-carbon double bond is preferably not less than 0.07% by volume, more preferably not less than 0.2% by volume, still more preferably not less than 0.7% by volume based on the total volume of the non-aqueous solvent. The upper limit of the content of the cyclic carbonate is preferably 7% by volume, more preferably 4% by volume, still more preferably 2.5% by volume, based on the total volume of the non-aqueous solvent. When the content is in the above-defined range, a marked increase in stability of the film during high-temperature continuous charge can be realized without sacrificing permeability to Li (lithium) ions at low temperatures.

The content of the cyclic carbonate having a fluorine atom may be properly determined by taking into consideration, for example, the realization of good electrochemical characteristics and performance required of the electrochemical device. For example, the content of the cyclic carbonate having a fluorine atom is preferably not less than 0.07% by volume, more preferably not less than 4% by volume, still more preferably not less than 7% by volume, based on the total volume of the non-aqueous solvent. The upper limit of the content of the cyclic carbonate is 35% by volume, more 25% by volume, still more 15% by volume, based on the total volume of the non-aqueous solvent. When the content of the cyclic carbonate is in the above-defined range, a marked increase in stability of the film during high-temperature continuous charge can be realized without sacrificing permeability to Li (lithium) ions at low temperatures.

In a preferred embodiment of the present invention, ethylene carbonate and/or propylene carbonate are used as the non-aqueous solvent. The incorporation of these materials is advantageous in that the resistance of the film formed on the electrode is low. The content of ethylene carbonate and/or propylene carbonate is preferably not less than 3% by volume, more preferably not less than 5% by volume, still more preferably 7% by volume, based on the total volume of the non-aqueous solvent. The upper limit of the content is preferably 45% by volume, more preferably 35% by volume, still more preferably 25% by volume, based on the total volume of the non-aqueous solvent.

One type of or a combination of two or more of these solvents may be used. The combined use of these solvents

is preferred from the viewpoint of further improving electrochemical characteristics in a wide range of temperature. A combination of three or more types of the solvents is particularly preferred. Suitable combinations of cyclic carbonates include a combination of EC and PC, a combination of EC and VC, a combination of PC and VC, a combination of VC and FEC, a combination of EC and FEC, a combination of PC and FEC, a combination of FEC and DFEC, a combination of EC and DFEC, a combination of PC and DFEC, a combination of VC and DFEC, a combination of VEC and DFEC, a combination of EC, PC, and VC, a combination of EC, PC, and FEC, a combination of EC, VC, and FEC, a combination of EC, VC, and VEC, a combination of PC, VC, and FEC, a combination of EC, VC, and DFEC, a combination of PC, VC, and DFEC, a combination of EC, PC, VC, and FEC, and a combination of EC, PC, VC, and DFEC. Among the above combinations, a combination of EC and VC, a combination of EC and FEC, a combination of PC and FEC, a combination of EC, PC, and VC, a combination of EC, PC, and FEC, a combination of EC, VC, and FEC, a combination of PC, VC, and FEC, and a combination of EC, PC, VC, and FEC are more preferred.

Chain ester

Examples of suitable chain esters usable in the present invention include asymmetric chain carbonates such as methyl ethyl carbonate (MEC), methyl propyl carbonate (MPC), methyl isopropyl carbonate (MIPC), methyl butyl carbonate, and ethyl propyl carbonate, symmetric chain carbonates such as dimethyl carbonate (DMC), diethyl carbonate (DEC), dipropyl carbonate, and dibutyl carbonate, pivalic esters such as methyl pivalate, ethyl pivalate, and propyl pivalate, and chain carbonic esters such as methyl propionate, ethyl propionate, methyl acetate, and ethyl acetate.

The content of the chain ester may be properly determined by taking into consideration, for example, the realization of good electrochemical characteristics and performance required of the electrochemical device. For example, the content of the chain ester is preferably 60 to 90% by volume based on the total volume of the non-aqueous solvent. When the content of the chain ester is not less than 60% by volume, the effect of lowering the viscosity of the non-aqueous electrolytic solution is satisfactory. On the other hand, a chain ester content of not more than 90% by volume is preferred because the electric conductivity of the non-aqueous electrolytic solution can be satisfactorily increased.

In a preferred embodiment of the present invention, methyl-containing chain esters selected from dimethyl carbonate, methyl ethyl carbonate, methyl propyl carbonate, methyl isopropyl carbonate, methyl butyl carbonate, methyl propionate, methyl acetate, and ethyl acetate are preferred, and methyl-containing chain carbonates are particularly preferred.

When chain carbonates are used, the use of a mixture of two or more of them is preferred. A combination of a symmetric chain carbonate with an asymmetric chain carbonate is more preferred. Still more preferably, the content of the symmetric chain carbonate is larger than the content of the asymmetric chain carbonate. Preferably, not less than 51% by volume, more preferably not less than 55% by volume, of the volume of the chain carbonate is accounted for by the symmetric chain carbonate. The upper limit of the content of the symmetric chain carbonate is preferably 95% by volume, more preferably 85% by volume. The presence of dimethyl carbonate in the symmetric chain carbonate is particularly preferred. More preferably, the asymmetric chain carbonate contains methyl, and methyl ethyl carbonate is particularly preferred. These embodiments are advantageous in that further improved electrochemical characteristics can be realized over a broader temperature range.

Mixture of cyclic carbonate with chain ester

In one preferred embodiment of the present invention, a combination of the cyclic carbonate with the chain ester is used as a non-aqueous solvent. The ratio between the cyclic carbonate and the chain ester is preferably cyclic carbonate : chain ester (volume ratio) = 10 : 90 to 45 : 55, more preferably 15 : 85 to 40 : 60, particularly preferably 20 : 80 to 35 : 65. The above-defined ratio is advantageous in that further improved electrochemical characteristics can be realized over a wide range of temperature.

Lactone, ether, amide, and other non-aqueous solvent

In the present invention, cyclic ethers such as tetrahydrofuran, 2-methyltetrahydrofuran, 1,3-dioxolane, 1,3-dioxane, and 1,4-dioxane and chain esters such as 1,2-dimethoxyethane, 1,2-diethoxyethane, and 1,2-dibutoxyethane may be mentioned as ethers usable as the non-aqueous solvent. In the present invention, ethers usable as the non-aqueous solvent include amides such as dimethylformamide. Further, in the present invention, sulfones such as sulfolane and lactones such as γ-butyrolactone, γ-valerolactone, and α-angelicalactone may be mentioned as the non-aqueous solvent.

The non-aqueous solvents are generally used as a mixture from the viewpoint of realizing proper properties. Suitable combinations include, in addition to the above combinations, a combination of a cyclic carbonate and a chain carbonate, a combination of a cyclic carbonate and a chain carboxylic ester, a combination of a cyclic carbonate, a chain

carbonate and a lactone, and a combination of a cyclic carbonate, a chain carbonate, and an ether, and a combination of a cyclic carbonate, a chain carbonate, and a chain carboxylic ester.

In one embodiment of the present invention, additives that can further improve properties and performance can be added to the non-aqueous electrolytic solution. Specific examples of other additives include: acetonitriles such as trimethyl phosphate, tributyl phosphate, and trioctyl phosphate; nitriles such as propionitrile, succinonitrile, glutaronitrile, adiponitrile, and pimelonitrile; isocyanates such as tetramethylene diisocyanate, hexamethylene diisocyanate, and octamethylene diisocyanate; sultone compounds such as 1,3-propane sultone, 1,3-butane sultone, 2,4-butane sultone, and 1,4-butane sultone; cyclic sulfite compounds such as ethylene sulfite, hexahydrobenzo[1,3,2] dioxathiolane-2-oxide (also known as 1,2-cyclohexanediol cyclic sulfite), and 5-vinyl-hexahydro-1,3,2-benzodioxathiol-2-oxide; sulfonic ester compounds such as 2-propynyl methanesulfonate and methylene methane disulfonate; S=O bond-containing compounds selected from vinyl sulfone compounds such as divinyl sulfone, 1,2-bis(vinyl sulfonyl)ethane, and bis(2-vinyl sulfonyl ethyl) ether; chain carboxylic anhydrides such as acetic anhydride and propionic anhydride; cyclic acid anhydrides such as succinic anhydride, maleic anhydride, glutaric anhydride, itaconic anhydride, and 3-sulfopropionic anhydride; cyclic phosphazene compounds such as methoxypentafluorocyclotriphosphazene, ethoxypentafluorocyclotriphosphazene, phenoxypentafluorocyclotriphosphazene, and ethoxyheptafluorocyclotetraphosphazene; aromatic compounds having a branched alkyl group such as cyclohexylbenzene, fluorocyclohexylbenzene compounds (1-fluoro-2-cyclohexylbenzene, 1-fluoro-3-cyclohexylbenzene, 1-fluoro-4-cyclohexylbenzene), tert-butylbenzene, tert-amylbenzene, and 1-fluoro-4-tert-butylbenzene; and aromatic compounds such as biphenyl, terphenyl (o-, m-, or p-form), diphenyl ether, fluorobenzene, difluorobenzene (o-, m-, or p-form), anisole, 2,4-difluoroanisole, and partially hydrogenated products of terphenyl (1,2-dicyclohexylbenzene, 2-phenyl bicyclohexyl, 1,2-diphenyl cyclohexane, or o-cyclohexylbiphenyl). Electrochemical characteristics improved over a wide range of temperature can be realized by adding proper additives.

[Electrolyte salt]

The following lithium salts may be mentioned as the electrolyte salt usable in the present invention. Preferably, the following onium salts may be further added.

<u>Lithium salt</u>

Suitable lithium salts include: inorganic lithium salts such as $LiPF_6$, $LiPO_2F_2$, $Li_2PO_3F$, $LiBF_4$, and $LiClO_4$; lithium salts containing a chain alkyl fluoride group such as $LiN(SO_2F)_2$, $LiN(SO_2CF_3)_2$, $LiN(SO_2C_2F_5)_2$, $LiCF_3SO_3$, $LiC(SO_2CF_3)_3$, $LiPF_4(CF_3)_2$, $LiPF_3(C_2F_5)_3$, $LiPF_3(CF_3)_3$, $LiPF_3(iso\text{-}C_3F_7)_3$, and $LiPF_5(iso\text{-}C_3F_7)$; lithium salts having a cyclic alkylene fluoride chain such as $(CF_2)_2(SO_2)_2NLi$ and $(CF_2)_3(SO_2)_2NLi$; and lithium salts having an oxalate complex as an anion such as lithium bis[oxalate-o,o']borate and lithium difluoro[oxalate-o,o']borate. They may be used solely or as a mixture of two or more of them. Among them, at least one material selected from $LiPF_6$, $LiPO_2F_2$, $Li_2PO_3F$, $LiBF_4$, $LiN(SO_2F)_2$, $LiN(SO_2CF_3)_2$, and $LiN(SO_2C_2F_5)_2$ is preferred. At least one material selected from $LiPF_6$, $LiPO_2F_2$, $LiBF_4$, and $LiN(SO_2CF_3)_2$ is more preferred. The concentration of the lithium salt is generally preferably not less than 0.3 M, more preferably not less than 0.7 M, still more preferably not less than 1.1 M, based on the non-aqueous solvent. The upper limit is preferably 2.5 M, more preferably 2.0 M, still more preferably 1.6 M.

A preferred combination of these lithium salts includes $LiPF_6$ and further at least one lithium salt selected from $LiPO_2F_2$, $LiBF_4$, and $LiN(SO_2CF_3)_2$ that are contained in a non-aqueous electrolytic solution. When the content of lithium salts other than $LiPF_6$ in the non-aqueous solvent is not less than 0.001 M, the effect of improving electrochemical characteristics at high temperatures is likely to be attained. On the other hand, when the content is not more than 0.005 M, advantageously, the effect of improving electrochemical characteristics at high temperatures is less likely to be lowered. The content is preferably not more than 0.01 M, particularly preferably not less than 0.03 M, most preferably not less than 0.04 M. The upper limit of the content is preferably 0.4 M, particularly preferably 0.2 M.

<u>Onium salt</u>

Various salts including combinations of the following onium cations and anions are suitable as the onium salt.

Specific examples of suitable onium cations include tetramethylammonium cation, ethyltrimethylammonium cation, diethyldimethylammonium cation, triethylmethylammonium cation, tetraethylammonium cation, N,N-dimethylpyrrolidinium cation, N-ethyl-N-methylpyrrolidinium cation, N,N-diethylpyrrolidinium cation, spiro-(N,N')-bipyrrolidinium cation, N,N'-dimethylimidazolinium cation, N-ethyl-N'-methylimidazolinium cation, N,N'-diethylimidazolinium cation, N,N'-dimethylimidazolinium cation, N-ethyl-N'-methylimidazolinium cation, and N,N'-diethylimidazolinium cation.

Specific examples of suitable anions include $PF_6$ anion, $BF_4$ anion, $ClO_4$ anion, $AsF_6$ anion, $CF_3SO_3$ anion, $N(CF_3SO_2)_2$ anion, and $N(C_2F_5SO_2)_2$ anion.

These electrolyte salts are usable either solely or in a combination of two or more of them.

[Production of non-aqueous electrolytic solution]

The non-aqueous electrolytic solution of the present invention can be obtained, for example, by mixing the non-aqueous solvents, adding the electrolyte salt to the mixture, and adding the compound represented by general formula (I) to the resultant non-aqueous electrolytic solution. In this case, the non-aqueous solvents used herein and the compound to be added to the non-aqueous electrolytic solution are those that have a lowest attainable impurity content attained by previously purifying them to such an extent that does not significantly sacrifice the productivity.

Electrochemical device

The non-aqueous electrolytic solution of the present invention is usable as an electrolyte for electrochemical devices, specifically for the following first to fourth electrochemical devices. The non-aqueous electrolyte may be in a liquid form as well as in a gel form. Further, the non-aqueous electrolytic solution of the present invention may also be used for solid polymer electrolytes. Among others, the non-aqueous electrolytic solution of the present invention is preferably used for the first electrochemical devices using lithium salts as the electrolyte salt, that is, for lithium batteries, or the fourth electrochemical devices, that is, for lithium ion capacitors, more preferably for lithium batteries, most preferably for lithium ion rechargeable batteries.

Thus, according to another aspect of the present invention, there is provided an electrochemical device including the non-aqueous electrolytic solution according to the present invention as the non-aqueous electrolytic solution therefor. Specific examples of such electrochemical devices include lithium batteries, electric double layer capacitors, electrochemical devices for storage of energy through the utilization of a doping/undoping reaction in the electrode, and lithium ion capacitors.

[First electrochemical device (lithium battery)]

The lithium battery according to the present invention is a concept including lithium primary batteries and lithium ion rechargeable batteries. The term "lithium ion rechargeable battery" as used herein is used as a concept including the so-called lithium ion rechargeable batteries. The lithium battery according to the present invention includes a positive electrode, a negative electrode, and the non-aqueous electrolytic solution according to the present invention. Constituent members other than the non-aqueous electrolytic solution, that is, the positive electrode, negative electrode and the like, may be properly configured.

Positive electrode

Composite metal oxides composed of lithium and at least one of cobalt, manganese, and nickel are usable as a positive electrode active material for lithium ion rechargeable batteries. These positive electrode active materials may be used either solely or in a combination of two or more of them. Such lithium composite metal oxides include, for example, $LiCoO_2$, $LiMn_2O_4$, $LiNiO_2$, $LiCo_{1-x}Ni_xO_2$ wherein $0.01 < x < 1$, $LiCo_{1/3}Ni_{1/3}Mn_{1/3}O_2$, $LiNi_{1/2}Mn_{3/2}O_4$, and $LiCo_{0.98}Mg_{0.02}O_2$. Further, a combination of $LiCoO_2$ with $LiMn_2O_4$, a combination of $LiCoO_2$ with $LiNiO_2$, and a combination of $LiMn_2O_4$ with $LiNiO_2$ may also be adopted.

A part of the lithium composite metal oxide may be replaced with other element(s) from the viewpoint of rendering the battery usable at a charge potential of not less than 4.3 V through an improvement in safety under overcharge conditions and cycle characteristics. Examples thereof include replacement of a part of cobalt, manganese, and nickel with one or more elements selected from Sn, Mg, Fe, Ti, Al, Zr, Cr, V, Ga, Zn, Cu, Bi, Mo, and La, replacement of a part of O with S or F, or covering with compounds containing these other elements. Among them, lithium composite metal oxides are preferred such as $LiCoO_2$, $LiMn_2O_4$, and $LiNiO_2$ that allow the charge potential of the positive electrode in a full charge state to be not less than 4.3 V on a Li basis. More preferred are lithium composite metal oxides that are usable at not less than 4.4 V, such as $LiCo_{1-x}M_xO_2$ wherein M represents at least one element selected from Sn, Mg, Fe, Ti, Al, Zr, Cr, V, Ga, Zn, and Cu; and $0.001 \le x \le 0.05$, $LiCo_{1/3}Ni_{1/3}Mn_{1/3}O_2$, $LiNi_{1/2}Mn_{3/2}O_4$, and a solid solution of $Li_2MnO_3$ and $LiMO_2$ wherein M represents a transition metal such as Co, Ni, Mn, or Fe. The use of lithium composite metal oxides that are operated at a high charge voltage sometimes makes it difficult to provide good electrochemical characteristics particularly over a wide range of temperature due to a reaction with the electrolytic solution during charge. In the lithium ion rechargeable battery according to the present invention, a lowering in these electrochemical characteristics can be suppressed.

The non-aqueous electrolytic solution according to the present invention can be particularly preferably used when the positive electrode contains Mn. In lithium batteries including Mn-containing positive electrode, there is a tendency towards an increase in resistance of the batteries due to the elution of Mn ions from the positive electrode. This in turn leads to a tendency towards a lowering in electrochemical characteristics. In the lithium ion rechargeable

battery according to the present invention, the lowering in the electrochemical characteristics can be advantageously suppressed.

Further, olivine form of lithium-containing phosphoric acid salts may also be used as the positive electrode active material. Olivine form of lithium-containing phosphoric acid salts containing at least one metal selected from iron, cobalt, nickel, and manganese are particularly preferred. Specific examples thereof include $LiFePO_4$, $LiCoPO_4$, $LiNiPO_4$, and $LiMnPO_4$. A part of these olivine form of lithium containing phosphoric acid salts may be replaced with other element(s). Examples thereof include replacement of a part of iron, cobalt, nickel, and manganese with one or more elements selected from Co, Mn, Ni, Mg, Al, B, Ti, V, Nb, Cu, Zn, Mo, Ca, Sr, W, Zr and the like, or covering with compounds containing these other elements or with carbon materials. Among them, $LiFePO_4$ or $LiMnPO_4$ is preferred. Further, olivine form of lithium-containing phosphoric acid salts may also be used as a mixture, for example, with the positive electrode active material.

Oxides of one or at least two metal elements or chalcogen compounds, such as CuO, $Cu_2O$, $Ag_2O$, $Ag_2CrO_4$, CuS, $CuSO_4$, $TiO_2$, $TiS_2$, $SiO_2$, SnO, $V_2O_5$, $V_6O_{12}$, $VO_x$, $Nb_2O_5$, $Bi_2O_3$, $Bi_2Pb_2O_5$, $Sb_2O_3$, $CrO_3$, $Cr_2O_3$, $MoO_3$, $WO_3$, $SeO_2$, $MnO_2$, $Mn_2O_3$, $Fe_2O_3$, FeO, $Fe_3O_4$, $Ni_2O_3$, NiO, $CoO_3$, and CoO, sulfur compounds such as $SO_2$ and $SOCl_2$, and carbon fluorides (graphite fluorides) represented by general formula $(CF_x)_n$ may be mentioned as the positive electrode for lithium primary batteries. Among them, $MnO_2$, $V_2O_5$, graphite fluorides and the like are preferred.

In one preferred embodiment of the present invention, the positive electrode may contain a conductive agent, and any electron-conductive material that does not cause a chemical change may be used as the conductive agent without particular limitation. Examples of preferred conductive agents include graphites such as natural graphites, for example, flaky graphites, and artificial graphites and carbon blacks such as acetylene black, ketjen black, channel black, furnace black, lamp black, and thermal black. The graphite and the carbon black may be properly mixed together before use. The amount of the conductive agent to the positive electrode mixture is preferably 1 to 10% by mass, particularly preferably 2 to 5% by mass.

The positive electrode may be prepared by a method suited to accomplishing an end. For example, the positive electrode can be prepared by mixing the positive electro deactive material with a conductive material such as acetylene black or carbon black and a binder such as polytetrafluoroethylene (PTFE), polyvinylidene fluoride (PVDF), a copolymer of styrene with butadiene (SBR), a copolymer of acrylonitrile with butadiene (NBR), carboxymethylcellulose (CMC), or ethylene propylene diene terpolymer, adding a high-boiling solvent such as 1-methyl-2-pyrrolidone, kneading the mixture to prepare a positive electrode mixture, then coating the positive electrode mixture on an aluminum foil or a stainless steel lath plate for a current collector, drying the coating, pressing the coating, and then heating the pressed coating at a temperature of approximately 50°C to 250°C under vacuum for about 2 hr.

In one preferred embodiment of the present invention, the density of the positive electrode excluding the current collector is generally not less than 1.5 $g/cm^3$. The density is preferably not less than 2 $g/cm^3$, more preferably not less than 3 $g/cm^3$, still more preferably not less than 3.6 $g/cm^3$, from the viewpoint of further enhancing the capacitance of the battery. The upper limit of the density is 4 $g/cm^3$.

<u>Negative electrode</u>

In the present invention, lithium metal, lithium alloys, and carbon materials (for example, easily graphitizable carbon and hardly graphitizable carbon having a spacing of not less than 0.37 nm in (002) face, and a graphite having a spacing of not more than 0.34 nm in a (002) face), tin (simple substance), tin compounds, silicon (simple substance), silicon compounds, and lithium titanate compounds such as $Li_4Ti_5O_{12}$ that can occlude and release lithium may be used either solely or in a combination of two or more of them as the negative electrode active material for lithium ion rechargeable batteries. Among them, high-crystallinity carbon materials such as artificial graphites and natural graphites are further preferred from the viewpoint of the capability of occluding and releasing lithium ions, and carbon materials having a graphite-type crystal structure having a spacing ($d_{002}$) of not more than 0.340 nm (nanometer), particularly 0.335 to 0.337 nm, in a lattice face (002) are particularly preferred.

In one preferred embodiment of the present invention, artificial graphite particles having a massive structure including a plurality of flat graphite fine particles that have been nonparallely aggregated or bonded to each other, or graphite particles treated by repeatedly applying mechanical action such as compressive force, frictional force, or shear force to flaky natural graphite particles for spheronization are used. In particular, when the negative electrode excluding the current collector is pressed to a density of not less than 1.5 $g/cm^3$, the ratio of the intensity of a peak of a (110) face, I(110), to the intensity of a peak of a (004) face, I(004), that is, I(110)/I(004), in a graphite crystal as obtained by X-ray diffractometry of the negative electrode sheet is not less than 0.01 from the viewpoint of electrochemical characteristics. In a preferred embodiment, the ratio is more preferably not less than 0.05, still more preferably not less than 0.1. On the other hand, when the treatment is excessively carried out, the crystallinity is lowered, sometimes resulting in lowered discharge capacitance of the battery. Accordingly, the upper limit is preferably 0.5, more preferably 0.3.

In one embodiment of the present invention, preferably, the highly crystalline carbon material (core material)

is covered with a carbon material that has lower crystallinity than the core material. This is advantageous in that the electrochemical characteristics can be further improved over a wide range of temperature. The crystallinity of the carbon material for covering can be confirmed under TEM.

When the highly crystalline carbon material is used, there is a tendency that the highly crystalline carbon material is reacted with the non-aqueous electrolytic solution during charge and, consequently, electrochemical characteristics at low temperatures or high temperatures are lowered due to increased interfacial resistance. According to the present invention, also in such lithium ion rechargeable batteries, good electrochemical characteristics can be obtained over a wide range of temperature.

Metal compounds as the negative electrode active material that can occlude and release lithium include compounds containing at least one metal element selected from Si, Ge, Sn, Pb, P, Sb, Bi, Al, Ga, In, Ti, Mn, Fe, Co, Ni, Cu, Zn, Ag, Mg, Sr, and Ba. These metal compounds may be in any form of simple substances, alloys, oxides, nitrides, sulfides, borides, alloys with lithium and the like. However, simple substances, alloys, oxides, or alloys with lithium are preferred from the viewpoint of increasing the capacitance. Among them, metal compounds containing at least one element selected from Si, Ge, and Sn are preferred, and metal compounds containing at least one element selected from Si and Sn are particularly preferred from the viewpoint of increasing the capacitance of the battery.

The negative electrode may be prepared by a method suited to accomplishing an end. For example, the negative electrode may be prepared by kneading a conductive agent, a binder, and a high boiling solvent that are the same as those used in the preparation of the positive electrode, to prepare a negative electrode mixture, coating the negative electrode mixture, for example, on a copper foil for the current collector, drying the coating, pressing the coating, and heating the pressed coating at a temperature of approximately 50°C to 250°C for about 2 hr under vacuum.

In one preferred embodiment of the present invention, the density of the negative electrode excluding the current collector is generally not less than 1.1 $g/cm^3$. The density is preferably not less than 1.5 $g/cm^3$, particularly preferably not less than 1.7 $g/cm^3$, from the viewpoint of further enhancing the capacity of the battery. The upper limit of the density is preferably 2 $g/cm^3$.

Lithium metal or lithium alloy may be mentioned as the negative electrode active material for lithium primary batteries.

In the present invention, the structure of the lithium battery is not particularly limited, and coin-type batteries, cylindrical batteries, angular batteries, and laminate-type batteries having a single-layer or a multi-layer separator can be applied. The battery separator is not particularly limited, and single-layer or multilayer microporous films, woven fabrics, nonwoven fabrics and the like that are made of polyolefins such as polypropylene or polyethylene are usable.

The lithium ion rechargeable battery according to the present invention exhibits excellent electrochemical characteristics in a wide range of temperature even at a charge final voltage of not less than 4.2 V, particularly not less than 4.3 V, even at a charge final voltage of not less than 4.4 V. The discharge final voltage can be generally not less than 2.8 V, further even not less than 2.5 V. In the lithium ion rechargeable battery according to the present invention, the discharge final voltage can be not less than 2.0 V. The current value is not particularly limited but is generally used in the range of 0.1 to 30C. The lithium battery according to the present invention can be charged and discharged at -40 to 100°C, preferably -10 to 80°C.

In the present invention, the provision of a safe valve in the lid of the battery and the provision of a cut in members such as battery cans and gaskets can be adopted as a measure for preventing an increase in the internal pressure of the lithium battery. Further, a current cutoff mechanism that detects the internal pressure of the battery to cut off the current can be provided in the lid of the battery as a safety measure for overcharge prevention purposes.

[Second electrochemical device (electric double layer capacitor)]

According to the present invention, there is also provided an electrochemical device that stores energy through the utilization of an electric double layer capacitance between an electrolytic solution and an electrode interface, wherein the non-aqueous electrolytic solution according to the present invention is used as the electrolytic solution. An example of the capacitor according to the present invention is an electric double layer capacitor. The electrode active material that is most typically used in the electrochemical device is activated carbon. The double layer capacitance increases substantially proportionally with the surface area.

[Third electrochemical device]

According to the present invention, there is also provided an electrochemical device that stores energy through the utilization of a doping/undoping reaction in the electrode, wherein the non-aqueous electrolytic solution according to the present invention is used as the electrolyte. Electrode active materials usable in the electrochemical device include metal oxides such as ruthenium oxide, iridium oxide, tungsten oxide, molybdenum oxide, and copper oxide and $\pi$-conjugated polymers such as polyacene and polythiophene derivatives. Capacitors using these electrode active materials

can store energy through the utilization of a doping/undoping reaction of the electrode.

[Fourth electrochemical device (lithium ion capacitor)]

According to the present invention, there is also provided an electrochemical device that stores energy through the utilization of intercalation of lithium ions in carbon materials such as graphite that is a negative electrode, wherein the non-aqueous electrolytic solution according to the present invention is used as the electrolyte. This element is called a lithium ion capacitor (LIC). Positive electrodes include, for example, those that utilize an electric double layer between an activated carbon electrode and an electrolytic solution and those that utilize a doping/undoping reaction of the $\pi$-conjugated polymer electrode. The electrolytic solution contains at least a lithium salt such as $LiPF_6$.

EXAMPLES

<u>Examples 1 to 19 and Comparative Examples 1 and 2</u>

[Preparation of lithium ion rechargeable battery]

$LiCoO_2$ (94% by mass) and acetylene black (conductive agent) (3% by mass) were mixed together, and the mixture was added to and mixed with a solution previously prepared by dissolving polyvinylidene fluoride (binder) (3% by mass) in 1-methyl-2-pyrrolidone to prepare a positive electrode mixture paste. The positive electrode mixture paste was coated on one surface of an aluminum foil (current collector). The coating was dried and pressed, followed by punching into a predetermined size to prepare a positive electrode sheet. The density of the positive electrode excluding the current collector was 3.6 g/cm$^3$. Separately, an artificial graphite ($d_{002}$=0.335 nm, negative electrode active material) (95% by mass) was added to and mixed with a solution previously prepared by dissolving polyvinylidene fluoride (binder) (5% by mass) in 1-methyl-2-pyrrolidone to prepare a negative electrode mixture paste. The negative electrode mixture paste was coated on one surface of a copper foil (current collector), and the coating was dried and pressed, followed by punching into a predetermined size to prepare a negative electrode sheet. The density of the negative electrode excluding the current collector was 1.5 g/cm$^3$. The electrode sheet was analyzed by X-ray diffractometry. As a result, the ratio of a peak intensity of (110) face, i.e. I(110), to a peak intensity of (004) face, i.e. I(004), of graphite crystal [I(110) / I(004)] was 0.1. The positive electrode sheet, a microporous polyethylene film separator, and the negative electrode sheet were stacked in that order. Further, a non-aqueous electrolytic solution having a composition described in Table 1 which will be described later was added to prepare a 2032-type coin battery.

[Evaluation of low-temperature characteristics after high-temperature continuous charge]

<Initial discharge capacity>

The coin battery prepared above was charged in a thermostatic chamber of 25°C at a constant current of 1C and a constant voltage to a final voltage of 4.2 V for 3 hr. The temperature of the thermostatic chamber was lowered to 0°C, and the battery was discharged to a final voltage of 2.75 V under a constant current of 1C to determine an initial discharge capacity at 0°C.

<<u>High-temperature continuous charge test</u>>

Next, the coin battery was charged in a thermostatic chamber of 25°C under conditions of a constant current of 0.2C and a constant voltage to a final voltage of 4.2 V for 7 hr, was then placed in a high-temperature chamber of 60°C, and was charged at a constant voltage of 4.2 V for 3 days. Thereafter, the coin battery was placed in a thermostatic chamber of 25°C, and was once discharged under a constant current of 1C to a final voltage of 2.75 V.

<<u>Discharge capacity after high-temperature continuous charge</u>>

Further, thereafter, the discharge capacity at 0°C after high-temperature continuous charge was determined in the same manner as in the measurement of the initial discharge capacity.

<Low temperature characteristics after high-temperature continuous charge>

The low-temperature characteristics after high-temperature continuous charge was determined from the retention of discharge capacity at 0°C.

Retention of discharge capacity at 0°C after high-temperature continuous charge (%) = (discharge capacity at 0°C after high-temperature continuous discharge/initial discharge capacity at 0°C) × 100

As a result, the battery characteristics were as shown in Table 1.

[Table 1]

| | Composition of electrolyte salt Composition of non-aqueous electrolytic solution (volume ratio of solvent) | Compound of general formula (I) | Addition amount (Content in non-aqueous electrolytic solution (wt%)) | Retention of discharge capacity at 0°C after high-temp. continuous charge (%) |
|---|---|---|---|---|
| Ex. 1 | 1.2M LiPF6 EC/DMC/MEC (30/50/20) | 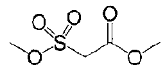 | 1.0 | 78 |
| Ex. 2 | 1.2M $LiPF_6$ + 0.05M $LiBF_4$ EC/VC/DMC/MEC (29/1/50/20) | 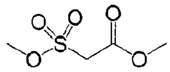 | 0.01 | 75 |
| Ex. 3 | 1.2M $LiPF_6$ + 0.05M $LiBF_4$ EC/VC/DMC/MEC (29/1/50/20) | 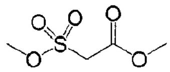 | 1.0 | 82 |
| Ex. 4 | 1.2M $LiPF_6$ + 0.05M $LiBF_4$ EC/VC/DMC/MEC (29/1/50/20) | 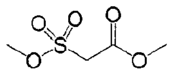 | 6 | 78 |
| Ex. 5 | 1.2M $LiPF_6$ + 0.05M $LiBF_4$ EC/FEC/VC/DMC/MEC (24/5/1/50/20) | 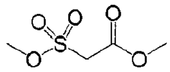 | 1.0 | 87 |
| Ex. 6 | 1.2M $LiPF_6$ + 0.05M $LiBF_4$ EC/VC/DMC/MEC (29/1/50/20) | 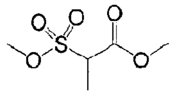 | 1.0 | 80 |
| Ex. 7 | 1.2M $LiPF_6$ + 0.05M $LiBF_4$ EC/VC/DMC/MEC (29/1/50/20) | 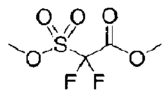 | 1.0 | 82 |
| Ex. 8 | 1.2M $LiPF_6$ + 0.05M $LiBF_4$ EC/VC/DMC/MEC (29/1/50/20) | 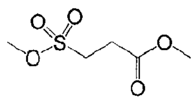 | 1.0 | 79 |
| Ex. 9 | 1.2M $LiPF_6$ + 0.05M $LiBF_4$ EC/VC/DMC/MEC (29/1/50/20) | 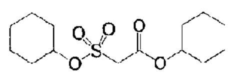 | 1.0 | 84 |
| Ex. 10 | 1.2M $LiPF_6$ + 0.05M $LiBF_4$ EC/VC/DMC/MEC (29/1/50/20) | 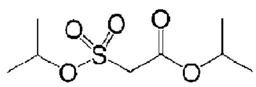 | 1.0 | 83 |
| Ex. 11 | 1.2M $LiPF_6$ + 0.05M $LiBF_4$ EC/VC/DMC/MEC (29/1/50/20) | 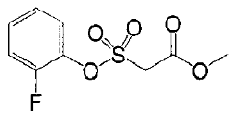 | 1.0 | 83 |
| Ex. 12 | 1.2M $LiPF_6$ + 0.05M $LiBF_4$ EC/VC/DMC/MEC (29/1/50/20) | 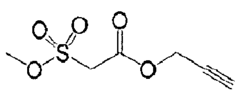 | 1.0 | 87 |

(continued)

| | Composition of electrolyte salt Composition of non-aqueous electrolytic solution (volume ratio of solvent) | Compound of general formula (I) | Addition amount (Content in non-aqueous electrolytic solution (wt%)) | Retention of discharge capacity at 0°C after high-temp. continuous charge (%) |
|---|---|---|---|---|
| Ex. 13 | 1.2M $LiPF_6$ + 0.05M $LiBF_4$ EC/FEC/VC/DMC/MEC (24/5/1/50/20) | 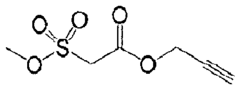 | 1.0 | 91 |
| Ex. 14 | 1.2M $LiPF_6$ + 0.05M $LiBF_4$ EC/VC/DMC/MEC (29/1/50/20) | 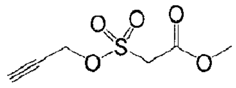 | 1.0 | 85 |
| Ex. 15 | 1.2M $LiPF_6$ + 0.05M $LiBF_4$ EC/VC/DMC/MEC (29/1/50/20) | 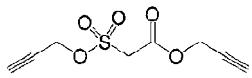 | 1.0 | 84 |
| Ex. 16 | 1.2M $LiPF_6$ + 0.05M $LiBF_4$ EC/VC/DMC/MEC (29/1/50/20) | 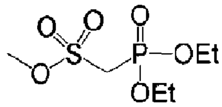 | 1.0 | 80 |
| Ex. 17 | 1.2M $LiPF_6$ + 0.05M $LiBF_4$ EC/VC/DMC/MEC (29/1/50/20) | 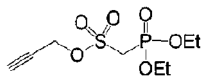 | 1.0 | 82 |
| Ex. 18 | 1.2M $LiPF_6$ + 0.05M $LiBF_4$ EC/FEC/VC/DMC/MEC (24/5/1//50/20) | 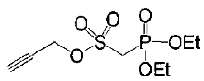 | 1.0 | 86 |
| Ex. 19 | 1.2M $LiPF_6$ + 0.05M $LiBF_4$ EC/VC/DMC/MEC (29/1/50/20) | 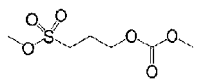 | 1.0 | 78 |
| Comp. Ex. 1 | 1.2M $LiPF_6$ + 0.05M $LiBF_4$ EC/VC/DMC/MEC (29/1/50/20) | None | - | 67 |
| Comp. Ex. 2 | 1.2M $LiPF_6$ + 0.05M $LiBF_4$ EC/VC/DMC/MEC (29/1/50/20) | 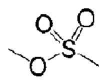 | 1.0 | 69 |

In the Table,
EC: ethylene carbonate
DMC: dimethyl carbonate
MEC: methyl ethyl carbonate
VC: vinylene carbonate
FEC: 4-fluoro-1 ,3-dioxolan-2-one

Example 20 and Comparative Example 3

Negative electrode sheets were prepared in the same manner as in Example 3 and Comparative Example 1, except that silicon (simple substance) (negative electrode active material) was used instead of the negative electrode active material used in Example 3 and Comparative Example 1. Silicon (simple substance) (80% by mass) and acetylene black (conductive agent) (15% by mass) were mixed together, and the mixture was added to and mixed with a solution previously prepared by dissolving polyvinylidene fluoride (binder) (5% by mass) in 1-methyl-2-pyrrolidone to prepare a negative electrode mixture paste. In the same manner as in Example 3 and Comparative Example 1, the preparation of coin batteries and the evaluation of the batteries were carried out except that the negative electrode mixture paste was coated on a copper foil (current collector), and the coating was dried and pressed, followed by punching into a predetermined size to prepare negative electrode sheets. The results were as shown in Table 2 below.

[Table 2]

| | Composition of electrolyte salt Composition of non-aqueous electrolytic solution (volume ratio of solvent) | Compound of general formula (I) | Addition amount (Content in non-aqueous electrolytic solution (wt%)) | Retention of discharge capacity at 0°C after high-temp. continuous charge (%) |
|---|---|---|---|---|
| Ex. 20 | 1.2M $LiPF_6$ + 0.05M $LiBF_4$ EC/VC/DMC/MEC (29/1/50/20) | 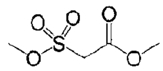 | 1.0 | 77 |
| Comp. Ex. 3 | 1.2M $LiPF_6$ + 0.05M $LiBF_4$ EC/VC/DMC/MEC (29/1/50/20) | None | - | 60 |

Example 21 and Comparative Example 4

Positive electrode sheets were prepared in the same manner as in Example 3 and Comparative Example 1, except that $LiFePO_4$ covered with amorphous carbon (positive electrode active material) was used instead of the positive electrode active material used in Example 3 and Comparative Example 1. $LiFePO_4$ covered with amorphous carbon (90% by mass) and acetylene black (conductive agent) (5% by mass) were mixed together, and the mixture was added to and mixed with a solution previously prepared by dissolving polyvinylidene fluoride (binder) (5% by mass) in 1-methyl-2-pyrrolidone to prepare a positive electrode mixture paste. In the same manner as in Example 3 and Comparative Example 1, the preparation of coin batteries and the evaluation of the batteries were carried out except that positive electrode sheets were prepared by coating the positive electrode mixture paste on an aluminum foil (current collector), drying and pressing the coating, and punching the pressed coating into a predetermined size and, in the evaluation of the batteries, the final charge voltage and the final discharge voltage were 3.6 V and 2.0 V, respectively. The results were as shown in Table 3 below.

[Table 3]

| | Composition of electrolyte salt Composition of non-aqueous electrolytic solution (volume ratio of solvent) | Compound of general formula (I) | Addition amount (Content in non-aqueous electrolytic solution (wt%)) | Retention of discharge capacity at 0°C after high-temp. continuous charge (%) |
|---|---|---|---|---|
| Ex. 21 | 1.2M $LiPF_6$ EC/VC/DMC/MEC (29/1/50/20) | 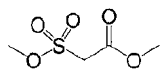 | 1.0 | 89 |
| Comp. Ex. 4 | 1.2M $LiPF_6$ EC/VC/DMC/MEC (29/1/50/20) | None | - | 79 |

All the lithium ion rechargeable batteries of Examples 1 to 19 were significantly superior in electrochemical characteristics over a wide range of temperature to a lithium ion rechargeable battery of Comparative Example 1 where the compound of formula (I) was not added, and a lithium ion rechargeable battery of Comparative Example 2 where a non-aqueous electrolytic solution with methyl methanesulfonate added thereto as described in PTL 1 was used. Thus, it was demonstrated that the effect of the present invention is characteristic of when the compound of formula (I) of the present invention is added to a non-aqueous electrolytic solution composed of an electrolyte salt dissolved in a non-aqueous solvent.

Lithium ion rechargeable batteries of Examples 3, 11, and 15 and Comparative Example 1 were charged in a thermostatic chamber of 60°C for 3 hr under conditions of a constant current of 1C and a constant voltage to a final voltage of 4.2 V and were discharged under a constant current of 1C to a discharge voltage of 3.0 V. This procedure constituted one cycle and was repeated until the number of cycles reached 200.

The retention of the capacity after the 200 cycles was determined by the following equation:

$$\text{Capacity retention (\%)} = (\text{discharge capacity after 200 cycles/discharge capacity after one cycle}) \times 100$$

As a result, it was found that the capacity retention was 78% for Example 3, 84% for Example 11, 77% for Example 15, and 65% for Comparative Example 1. The results reveal that the present invention can also realize a significant improvement in high-temperature cycle characteristics.

The comparison of Example 20 with Comparative Example 3 and the comparison of Example 21 with Comparative Example 4 reveal that the same effect can be attained when silicon (simple substance) (Si) is used as the negative electrode and when a lithium-containing olivine iron phosphate ($LiFePO_4$) is used as the positive electrode. Accordingly, it is evident that the effect of the present invention is not dependent upon specific positive electrode and negative electrode.

Further, the non-aqueous electrolytic solution of the present invention has also the effect of improving discharge characteristics over a wide range of temperature in lithium primary batteries.

## Claims

**1.** A non-aqueous electrolytic solution comprising a non-aqueous solvent and an electrolyte salt dissolved in the non-aqueous solvent, wherein the non-aqueous electrolytic solution further comprises a compound represented by general formula (I):

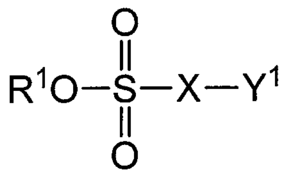

(I)

wherein
$R^1$ represents
a straight or branched alkyl group that has 1 to 6 carbon atoms and is optionally substituted by a halogen atom,
a cycloalkyl group that has 3 to 7 carbon atoms and is optionally substituted by a halogen atom,
a straight or branched alkenyl group that has 2 to 6 carbon atoms and is optionally substituted by a halogen atom,
a straight or branched alkynyl group that has 2 to 6 carbon atoms and is optionally substituted by a halogen atom, or
an aryl group that has 6 to 12 carbon atoms and is optionally substituted by a halogen atom;
X represents a divalent linking group that has 1 to 6 carbon atoms and is optionally substituted by a halogen atom; and
$Y^1$ represents any of groups represented by general formulae (II) to (VI):

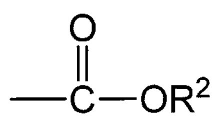

(II)

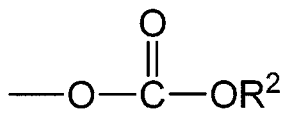

(III)

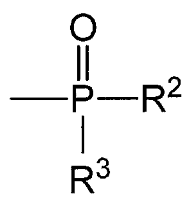

(IV)

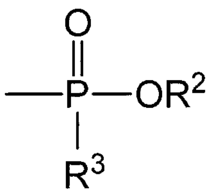

(V)

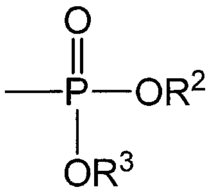

(VI)

wherein $R^2$ and $R^3$ each independently represent
a straight or branched alkyl group that has 1 to 6 carbon atoms and is optionally substituted by a halogen atom,
a cycloalkyl group that has 3 to 7 carbon atoms and is optionally substituted by a halogen atom,
a straight or branched alkenyl group that has 2 to 6 carbon atoms and is optionally substituted by a halogen atom,
a straight or branched alkynyl group that has 2 to 6 carbon atoms and is optionally substituted by a halogen atom,
or an aryl group that has 6 to 12 carbon atoms and is optionally substituted by a halogen atom.

**2.** The non-aqueous electrolytic solution according to claim 1, wherein X represents a straight or branched alkylene group having 1 to 6 carbon atoms.

**3.** The non-aqueous electrolytic solution according to claim 1 or 2, wherein
$R^1$ represents
a straight or branched alkyl group having 1 to 6 carbon atoms, a cycloalkyl group having 3 to 7 carbon atoms,
a straight or branched alkynyl group having 2 to 6 carbon atoms, or
an aryl group that has 6 to 12 carbon atoms and is optionally substituted by a halogen atom,
X represents a straight or branched alkylene group having 1 to 6 carbon atoms, and
$Y^1$ represents formula (II) or (III)
wherein $R^2$ represents
a straight or branched alkyl group having 1 to 6 carbon atoms, a cycloalkyl group having 3 to 7 carbon atoms,
a straight or branched alkynyl group having 2 to 6 carbon atoms, or
an aryl group that has 6 to 12 carbon atoms and is optionally substituted by a halogen atom.

**4.** A non-aqueous electrolytic solution according to claim 3,
wherein
$R^1$ represents
a straight or branched alkyl group having 1 to 4 carbon atoms, a cycloalkyl group having 5 or 6 carbon atoms,
a straight or branched alkynyl group having 3 or 4 carbon atoms, or
an aryl group that has 6 to 12 carbon atoms and is optionally substituted by a halogen atom selected from fluorine, chlorine, bromine, and iodine atoms,
X represents a straight or branched alkylene group having 1 to 4 carbon atoms, and
$Y^1$ represents formula (II) or (III)
wherein $R^2$ represents
a straight or branched alkyl group having 1 to 4 carbon atoms,
a cycloalkyl group having 5 or 6 carbon atoms,
a straight or branched alkynyl group having 3 or 4 carbon atoms, or
an aryl group that has 6 to 12 carbon atoms and is optionally substituted by a halogen atom selected from fluorine, chlorine, bromine, and iodine atoms.

**5.** The non-aqueous electrolytic solution according to claim 3 or 4, wherein $Y^1$ is represented by formula (II).

**6.** The non-aqueous electrolytic solution according to claim 3 or 4, wherein $Y^1$ is represented by formula (III) wherein $R^2$ represents a straight or branched alkyl group having 1 to 6 carbon atoms.

7. The non-aqueous electrolytic solution according to any one of claims 3 to 6, wherein $R^2$ is phenyl group optionally substituted by a halogen atom selected from fluorine, chlorine, bromine, and iodine atoms.

8. The non-aqueous electrolytic solution according to claim 1 or 2,
wherein
$R^1$ represents
a straight or branched alkyl group that has 1 to 6 carbon atoms or straight chain or branched chain alkynyl having 2 to 6 carbon atoms,
X represents a straight or branched alkylene group having 1 to 6 carbon atoms; and
$Y^1$ represents formula (IV), (V), or (VI)
wherein $R^3$ represents a straight or branched alkyl group having 1 to 6 carbon atoms.

9. The non-aqueous electrolytic solution according to claim 8, wherein
$R^1$ represents
a straight or branched alkyl group that has 1 to 4 carbon atoms or a straight or branched alkynyl group having 3 or 4 carbon atoms,
X represents a straight or branched alkylene group having 1 to 4 carbon atoms; and
$Y^1$ represents formula (IV), (V), or (VI)
wherein $R^3$ represents a straight or branched alkyl group having 1 to 4 carbon atoms.

10. The non-aqueous electrolytic solution according to claim 8 or 9, wherein $Y^1$ represents formula (VI).

11. The non-aqueous electrolytic solution according to any one of claims 1 to 10, wherein the content of the compound represented by general formula (I) is 0.001 to 10% by mass.

12. The non-aqueous electrolytic solution according to any one of claims 1 to 11, wherein the non-aqueous solvent contains a cyclic carbonate that is one or at least two carbonates selected from ethylene carbonate, propylene carbonate, 1,2-butylene carbonate, 2,3-butylene carbonate, 4-fluoro-1,3-dioxolan-2-one, trans or cis-4,5-difluoro-1,3-dioxolan-2-one, vinylene carbonate, and vinylethylene carbonate.

13. The non-aqueous electrolytic solution according to any one of claims 1 to 11, wherein the non-aqueous solvent contains a chain ester that is one or at least two esters selected from asymmetric chain carbonates selected from methyl ethyl carbonate, methyl propyl carbonate, methyl isopropyl carbonate, methyl butyl carbonate, and methyl propyl carbonate, symmetric chain carbonates selected from dimethyl carbonate, diethyl carbonate, dipropyl carbonate, and dibutyl carbonate, pivalic esters selected from methyl pivalate, ethyl pivalate, and propyl pivalate, and chain carboxylic esters selected from methyl propionate, ethyl propionate, methyl acetate, and ethyl acetate.

14. The non-aqueous electrolytic solution according to claim 13, wherein the chain ester is one or at least two methyl-containing chain esters selected from methyl ethyl carbonate, methyl propyl carbonate, methyl isopropyl carbonate, methyl butyl carbonate, dimethyl carbonate, methyl propionate, methyl acetate, and ethyl acetate.

15. The non-aqueous electrolytic solution according to any one of claims 1 to 14, wherein the electrolyte salt contains one or at least two compounds selected from $LiPF_6$, $LiPO_2F_2$, $Li_2PO_3F$, $LiBF_4$, $LiN(SO_2CF_3)_2$, $LiN(SO_2C_2F_5)_2$, $LiN(SO_2F)_2$, lithium difluorobis[oxalate-O,O']phosphate, and lithium tetrafluoro[oxalate-O,O']phosphate.

16. The non-aqueous electrolytic solution according to any one of claims 1 to 15, wherein the concentration of the electrolyte salt is 0.3 to 2.5 M based on the non-aqueous solvent.

17. An electrochemical device comprising: a positive electrode; a negative electrode; and a non-aqueous electrolytic solution containing an electrolyte salt dissolved in a non-aqueous solvent, wherein the non-aqueous electrolytic solution is a non-aqueous electrolytic solution according to any one of claims 1 to 16.

18. The electrochemical device according to claim 17, wherein the positive electrode comprises, as a positive electrode active material, a composite metal oxide of one or more metals selected from cobalt, manganese, and nickel with lithium, or lithium-containing olivine form of phosphoric acid salts containing one or more metals selected from iron, cobalt, nickel, and manganese.

19. The electrochemical device according to claim 17 or 18, wherein the negative electrode comprises, as a negative

electrode active material, one or at least two materials selected from lithium metal, lithium alloys, carbon materials capable of occluding and releasing lithium, tin, tin compounds, silicon, silicon compounds, and lithium titanate compounds.

## INTERNATIONAL SEARCH REPORT

International application No. PCT/JP2012/069818

A. CLASSIFICATION OF SUBJECT MATTER

*H01M10/0567*(2010.01)i, *H01G9/038*(2006.01)i, *H01M4/485*(2010.01)i, *H01M4/58*(2010.01)i, *H01M10/052*(2010.01)i, *H01M10/0568*(2010.01)i, *H01M10/0569*(2010.01)i

According to International Patent Classification (IPC) or to both national classification and IPC

B. FIELDS SEARCHED

Minimum documentation searched (classification system followed by classification symbols)

H01M10/0567, H01G9/038, H01M4/485, H01M4/58, H01M10/052, H01M10/0568, H01M10/0569

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2008-146983 A (Sony Corp.),<br>26 June 2008 (26.06.2008),<br>claims; paragraphs [0038] to [0073]<br>& US 2008/0138714 A1 & KR 10-2008-0053183 A<br>& CN 101197455 A | 1-5,11-19<br>6-10 |
| A | JP 2009-163890 A (Sony Corp.),<br>23 July 2009 (23.07.2009),<br>claims<br>& US 2009/0263726 A1 & CN 101471436 A<br>& KR 10-2009-0073048 A | 1-19 |
| A | JP 2008-308421 A (Sony Corp.),<br>25 December 2008 (25.12.2008),<br>claims<br>(Family: none) | 1-19 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 14 September, 2012 (14.09.12) | 25 September, 2012 (25.09.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/069818

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-54298 A (Hitachi Maxell, Ltd.), 17 March 2011 (17.03.2011), claims (Family: none) | 1-19 |
| A | JP 2011-515807 A (LG Chem, Ltd.), 19 May 2011 (19.05.2011), claims & US 2011/0008684 A1 & EP 2266159 A & WO 2009/116740 A2 & KR 10-2009-0100249 A & CN 101978548 A | 1-19 |

Form PCT/ISA/210 (continuation of second sheet) (July 2009)

**INTERNATIONAL SEARCH REPORT**

International application No.
PCT/JP2012/069818

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

"A nonaqueous electrolyte solution which contains at least a nonaqueous solvent and an electrolyte salt dissolved therein and which additionally contains at least one compound represented by general formula (I)", which is the technical feature common to claims 1-19, is set forth in document 1 cited in this international search report. Consequently, the common technical feature is not novel and thus cannot be considered as a special technical feature.

Consequently, it is obvious that this international application does not comply with the requirement of unity of invention, since there is no "special technical feature" in claims 1-19.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007095380 A